# FASCICULE DE BREVET EUROPEEN

(11) **EP 0 449 698 B1**
(45) Date de publication et mention de la délivrance du brevet: **03.08.1994**
(21) Numéro de dépôt: 91400715.8
(22) Date de dépôt: 15.03.1991
(51) Int. Cl.: F16D 3/06, F16D 3/38

(54) **Capsule d'obturation d'un organe tubulaire, notamment pour système télescopique d'arbres de transmission à cardan**
Verschlusskappe eines schlauchförmigen Organs, insbesondere für ein teleskopisches System von Kardanantriebswellen
Closure cap for a tubular organ, especially for a telescoping system of cardan transmission shafts

(30) Priorité: 29.03.1990 FR 9004040
(43) Date de publication de la demande: 02.10.1991
(73) Titulaire: GLAENZER SPICER, F-78301 Poissy (FR)
(72) Inventeur: Mangiavacchi, Jacques, F-78400 Chatou (FR); Brossard, Jean-Claude, F-78250 Meulan (FR)
(74) Mandataire: Phélip, Bruno

(56) Documents cités:
- FR-A- 2 183 395
- FR-A- 2 526 760
- US-A- 1 917 988
- US-A- 2 510 362
- US-A- 2 650 484
- US-A- 4 114 898

## Description

La présente invention concerne une capsule d'obturation d'un organe tubulaire constituant un premier élément pour système télescopique d'arbre de transmission à cardan, cette capsule étant destinée à être fixée par des moyens d'immobilisation périphériques à l'une des extrémités d'un alésage axial dudit organe pour constituer avec une extrémité d'un second élément dudit système télescopique, monté coulissant axialement dans ledit premier élément, une chambre étanche de coulissement à volume variable.

Il est connu des capsules d'obturation équipant actuellement les transmissions à cardan, et qui sont constituées par une rondelle métallique circulaire plate et symétrique, découpée dans un flan de tôle, et qui comporte un trou central autour duquel sont prévus plusieurs trous périphériques ou satellites, équidistants les uns des autres en direction circonférentielle et obturés à l'aide d'un clapet en caoutchouc enfiché ou encliqueté élastiquement dans le trou central, et susceptible de mettre en communication la chambre de coulissement étanche avec l'extérieur, lors d'une surpression s'échappant par les trous satellites en surmontant la résistance adéquatement choisie d'ouverture du clapet.

Le brevet FR-A-2.183.395 est relatif à un de ces types de capsules d'obturation. Dans ce document, la capsule d'obturation à clapet de surpression d'un organe tubulaire constituant notamment un premier élément pour système télescopique d'arbres de transmission à cardan, est destinée à être fixée par des moyens d'immobilisation périphériques à l'une des extrémités d'un alésage axial dudit organe. La capsule constitue avec une extrémité d'un second élément dudit système télescopique, monté coulissant axialement dans ledit premier élément, une chambre étanche de coulissement à volume variable. Les moyens d'immobilisation périphériques sont constitués par un rebord périphérique circulaire apte à s'engager dans une gorge périphérique de retenue axiale ménagée à l'intérieur dudit alésage dudit organe tubulaire, à proximité de l'extrémité correspondante de ce dernier.

Une telle capsule est initialement centrée avec un jeu radial dans un chambrage de l'extrémité de l'organe tubulaire, et un sertissage par points ou circulaire est effectué sur la périphérie de ce chambrage par déformation de matière dudit organe.

Si ce type de capsule a donné satisfaction jusqu'à une période récente, certaines évolutions des cahiers des charges des constructeurs, ainsi que de nouvelles orientations technologiques, dans le choix conceptuel des transmissions à cardan, ont remis en question certains concepts. Par exemple, l'utilisation de la fonte pour la réalisation de mâchoires à coulisse, constituant un élément de ce type de transmission, présente des inconvénients majeurs pour le sertissage, qui, effectué par déformations plastique de la matière de l'extrémité de l'organe tubulaire, provoque dans cette zone une fissuration des parties déformées, voire leur cisaillement, ce qui a pour conséquence de provoquer la perte de la capsule. La faible ductilité de la fonte nécessite donc un contrôle rigoureux du procédé de capsulage, car les parties déformées par sertissage doivent impérativement rester dans la zone de déformation plastique du matériau, qui est très limitée dans le cas de la fonte.

En outre, du fait de la pression du lubrifiant dans le système télescopique, il s'est révélé une étanchéité insuffisante de la capsule ainsi immobilisée, car cette étanchéité est effectuée par le simple appui de l'une des faces de la capsule sur un épaulement constitué par le fond d'un chambrage réalisé dans l'extrémité correspondante de l'alésage axial de l'organe tubulaire. Les deux surfaces destinées à venir en contact sont, de par leurs moyens d'obtention, de planéité imparfaite, et l'opération de sertissage périphérique par poins ou circulaire, ne suffit pas à mettre ces surfaces en contact l'une contre l'autre pour assurer un minimum d'étanchéité, car, lors de la rotation de la transmission, sous l'effet de la force centrifuge, et par capillarité, le lubrifiant contenu dans la mâchoire à coulisse s'échappe par l'interface entre la capsule et le fond du chambrage.

De plus, le sertissage par points limite la tenue axiale de l'ensemble car, en effet, pendant la manipulation, le transport ou l'assemblage de la transmission sur véhicule, des déplacements relatifs inopportuns des éléments télescopiques peuvent ébranler le sertissage de la capsule et aller jusqu'à la rupture des parties déformées issues du sertissage et provoquant la perte de la capsule.

Un autre inconvénient réside dans le fait que le lubrifiant présent entre la face intérieure de la capsule et l'extrémité du second élément coulissant du système télescopique s'échappe entièrement par les trous satellites après ouverture du clapet, lorsque l'extrémité dudit élément coulissant se trouve en position de coulissement au plus près de la capsule.

Enfin, en cas de mise en place d'un graisseur central, cela oblige à introduire une buse de graissage dans le coeur du joint de Cardan, du côté de l'extrémité correspondante du système télescopique dont la machoire à coulisse constitue le premier élément coulissant, c'est-à-dire à la hauteur du clapet, qui se trouve ainsi parfois déboité, voire arraché de son siège par l'agraphe de graissage, lors de son encliquetage sur la tête du graisseur.

Le but de la présente invention est de remédier à ces nombreux inconvénients ressortant de la technique actuelle.

L'invention propose, à cet effet, une capsule d'obturation d'un organe tubulaire constituant notamment un premier élément pour système télescopique d'arbres de transmission à Cardan, ladite capsule étant destinée à être fixée par des moyens d'immobilisation périphériques à l'une des extrémités d'un alésage axial dudit organe pour constituer avec une extrémité d'un second élément dudit système télescopique, monté coulissant axialement dans ledit premier élément, une chambre étanche de coulissement à volume variable.

Selon l'invention, les moyens d'immobilisation périphériques sont constitués par un rebord périphérique circulaire axial obtenu de matière avec la capsule pour constituer une cuvette cylindrique apte à s'engager dans une gorge périphérique de retenue axiale ménagée à l'intérieur dudit alésage dudit organe tubulaire, à proximité de l'extrémité correspondante de ce dernier.

La présente invention concerne également les caractéristiques ci-après considérées isolément ou en combinaison.

Selon un mode préféré de réalisation, le rebord de la cuvette est expansé, sensiblement radialement vers l'extérieur, dans la gorge de l'organe tubulaire par refoulement de matière de la capsule, et non de l'organe tubulaire, au cours d'une opération de sertissage, pour y être retenu axialement par un épaulement de ladite gorge. Ceci assure une excellente tenue axiale de la capsule et une bonne étanchéité au lubrifiant, sans fragiliser l'organe tubulaire.

Selon une variante de réalisation, le rebord axial de la cuvette a un profil sensiblement correspondant à celui de la gorge, dans laquelle il s'engage élastiquement jusqu'à encliquetage derrière un épaulement de retenue axiale de ladite gorge. L'étanchéité assurée par cette variante est peut être un peu moins bonne que dans le mode de réalisation préféré, mais ceci est compensé par une économie de moyens de mise en oeuvre et de montage de la capsule.

En effet, une telle réalisation présente l'avantage de ne nécessiter aucun dispositif de sertissage, et, dans certaines limites, la capsule peut même être mise en place à la main.

Selon une autre caractéristique de l'invention, la gorge de l'organe tubulaire est ménagée sur la paroi périphérique interne d'un chambrage aménagé dans la partie d'extrémité correspondante de l'alésage de l'organe tubulaire, et dont le fond constitue un épaulement radial sur lequel vient en butée axiale la cuvette, lors du montage de la capsule, afin d'améliorer l'étanchéité. Mais cette étanchéité et la tenue axiale de la capsule sont encore améliorées si, de plus, une partie annulaire de cuvette cylindrique, située entre son rebord logé dans la gorge et sa base de liaison à la partie centrale de la capsule, est déformée en expansion sensiblement radiale vers l'extérieur contre la paroi périphérique interne du chambrage, au montage de la capsule dans l'alésage défini par ce chambrage.

Selon une autre caractéristique de l'invention, la gorge est réalisée selon une pente, dans sa partie dirigée vers ladite extrémité correspondante de l'alésage de l'organe tubulaire, et selon une profondeur, aptes à assurer la retenue axiale de ladite capsule après mise en place.

Selon une autre caractéristique avantageuse de l'invention, la capsule est obtenue à partir d'un flan de tôle circulaire embouti déformé dans sa partie centrale, pour constituer un logement concave apte à loger une tête d'un clapet de surpression en caoutchouc, encliqueté dans un trou central ménagé dans le fond dudit logement concave de la capsule et en communication avec la chambre de coulissement du sytème télescopique, de sorte que la tête du clapet obture de manière étanche des trous répartis autour du trou central et également ménagés dans le fond du logement concave.

Ainsi logé dans ledit logement central concave, le clapet est protégé contre toutes agressions des agraphes de graissage, lors des opérations de lubrification de l'ensemble.

De plus, sur le plan de l'étanchéité, l'expansion de la cuvette de la capsule dans la gorge et son contact d'une façon générale avec le chambrage, assure une étanchéité efficace supprimant toutes pertes de lubrifiant aussi bien en période de rotation que pendant l'arrêt de la transmission.

Selon une autre caractéristique avantageuse de l'invention, la partie centrale de ladite capsule constituée par le logement concave est reliée à la base de la cuvette par une partie intermédiaire convexe, apte à constituer une réserve de lubrifiant, dans la position minimum de coulissement du système télescopique.

Afin de donner un volume suffisant à cette réserve de lubrifiant, il est en outre avantageux que le fond et le bord périphérique du logement concave de la capsule soient décalés axialement vers 1′ extrémité correspondante dudit alésage par rapport respectivement à la base et au bord d'extrémité libre de la cuvette cylindrique.

Pour l'équipement de lignes d'arbres de transmission articulées à joints de Cardan de faible angularité, par exemple, il est par contre avantageux que, selon une autre caractéristique de l'invention, la partie centrale de la capsule, constituée par le logement concave, soit reliée à la base de la cuvette de la capsule par une partie intermédiaire plane et radiale, s'étendant sensiblement perpendiculairement à l'axe de la cuvette cylindrique.

En outre, pour l'équipement de transmissions à joints de Cardan de petites dimensions, et selon l'invention, il est avantageux que le logement concave de la capsule soit d'une faible profondeur axiale par rapport à la dimension axiale du clapet, et que le bord périphérique du logement concave se trouve à proximité de la base de la cuvette cylindrique de la capsule, de sorte que la tête du clapet puisse se loger dans le logement concave et dans la cuvette cylindrique.

Dans ces différentes variantes de réalisation, le fond du logement concave présente avantageusement la forme d'une calotte sphérique centrée sur l'axe du trou central.

D'une manière générale, selon les caractéristiques précitées, la suppression du sertissage de la capsule par déformation de la matière de la mâchoire et son remplacement par le refoulement de la capsule dans un chambrage muni d'une gorge, améliorent non seulement la tenue axiale de la capsule elle-même, mais aussi la tenue en fatigue, sous couple alterné, de la mâchoire, dont certaines ruptures s'initialisent à partir des points de sertissage. Il est à noter que la charge nécessaire au capsulage selon l'inveniton varie de 2000 à 5000 daN suivant le dimensionnement, alors que pour le sertissage par déformation de matière, tel que connu, elle est de l'ordre de 3000 à 8000 daN.

Il est à noter également que ce capsulage assure, dans des conditions d'essais identiques, une tenue axiale statique et dynamique, environ trois fois supérieure à celle obtenue par le sertissage par points de l'état de la technique.

L'invention sera encore illustrée, sans être aucunement limitée, par la description qui suit, faite en regard des dessins annexés sur lesquels :
- la figure 1 est une vue en coupe longitudinale d'un système télescopique pour transmission à Cardan avec mâchoire à coulisse munie d'une capsule d'obturation selon l'invention, après sertissage,
- la figure 2 est une vue en plan de la capsule selon l'invention qui est montée dans le dispositif de la figure 1,
- la figure 3 est une vue en coupe diamétrale de la capsule selon la ligne II-II de la figure 2,
- la figure 4 est une vue de détail, à échelle agrandie, montrant selon le détail A de la figure 1, la position relative de la capsule par rapport à la gorge de la mâchoire, avant sertissage,
- la figure 5 est une vue de détail, à échelle agrandie, montrant la capsule immédiatement avant sertissage et après sertissage,
- la figure 6 est une demi-vue en coupe longitudinale d'une première variante de réalisation d'une capsule selon l'invention montée en position d'obturation,
- la figure 7 est une vue analogue à la figure 6 d'une autre variante de réalisation d'une capsule selon l'invention, montée en position d'obturation.

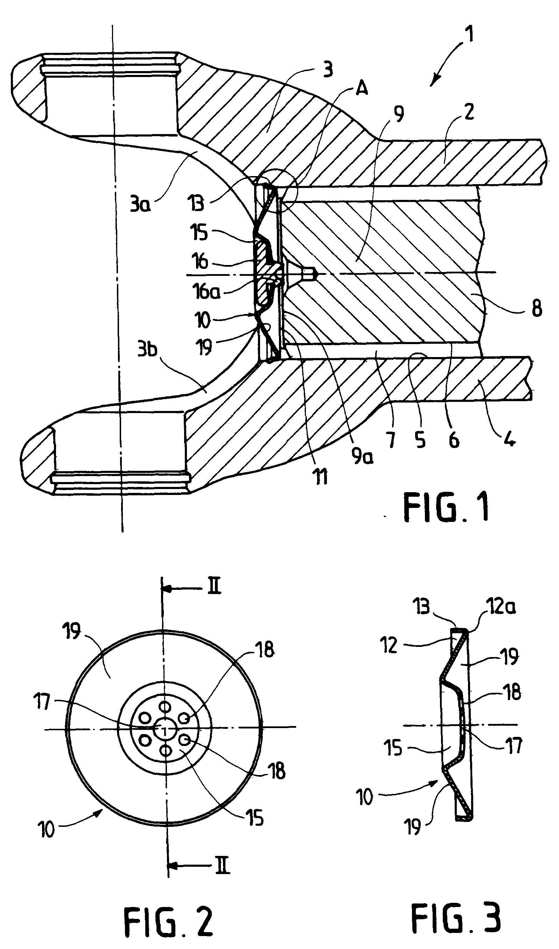

Selon un premier exemple de réalisation, représenté sur la figure 1, un système télescopique 1 représenté partiellement se compose d'un premier élément 2, constitué par une mâchoire 3 représentant une partie d'articulation à Cardan, prolongée par un organe tubulaire ou fourreau 4, dont l'alésage axial 5 comporte des cannelures longitudinales internes 6 coopérant en coulissement avec des cannelures longitudinales externes correspondantes 7 d'un second élement 8 du système télescopique, ces cannelures 7 étant ménagées sur un embout cylindrique 9 dudit second élément 8, apte à coulisser dans le fourreau 4 du premier élément 2. L'ensemble ainsi constitué est muni, à l'une de ses extrémités (non représentée), d'un joint d'étanchéité coulissant, disposé entre les premier et second éléments 2, 8 du système télescopique, et obturé à son autre extrémité, au débouché de l'alésage 5 entre les oreilles 3a, 3b de la mâchoire 3, par une capsule 10 selon l'invention, définissant avec l'extrémité 9a de l'embout cylindrique 9, une chambre étanche de coulissement 11, à volume variable.

La capsule 10, selon l'invention est obtenue par exemple à partir d'un flan de tôle d'acier découpé circulairement, puis embouti pour obtenir une cuvette cylindrique 12 délimitée périphériquement par un rebord axial 13 obtenu avec la cuvette au cours d'une même opération d'estampage et apte à s'engager dans une gorge périphérique de retenue axiale 14, usinée dans la paroi interne de la partie d'extrémité correspondante de l'alésage 5 du fourreau 4, pour constituer en coopération avec ladite gorge 14 des moyens d'immobilisation périphériques de ladite capsule à l'extrémité du fourreau 4.

La cuvette 10, telle que représentée à la figure 1, comporte en outre, obtenue au cours de l'opération d'estampage, une déformation centrale constituant un logement concave 15, dont la concavité est tournée vers l'extérieur de l'alésage 5, et apte à loger la tête d'un clapet de surpression 16 en caoutchouc, enfiché ou encliqueté élastiquement par une tige centrale 16a de forme tronconique dans un trou central 17 ménagé dans le fond du logement concave 15 de la capsule 10, et entouré de trous périphériques ou satellites 18 également ménagés dans le fond du logement 15. La tête du clapet est d'un diamètre extérieur suffisant pour qu'elle recouvre les trous satellites 18, équidistants les uns des autres en direction circonférentielle autour du trou central 17 et au nombre de six dans le présent exemple. Le clapet 16 assure ainsi l'étanchéité, sauf en cas de surpressions, qui sont évacuées par les trous 18 en soulevant la tête du clapet 16.

Le logement concave 15 ainsi défini est relié à la base 12a de la cuvette 12 par une partie intermédiaire convexe 19, dont la convexité est tournée vers l'extérieur de l'alésage 5, et apte à constituer une réserve de lubrifiant, dans la position minimum de coulissement du système télescopique, tel que représenté à la figure 1.

La capsule 10 est revêtue d'une protection anti-corrosion de type zingage-bichromatage par exemple.

La gorge 14 du fourreau 4 est ménagée dans la paroi périphérique interne d'un chambrage 20 réalisé dans la partie d'extrémité correspondante de l'alésage 5 dudit fourreau 4, et dont le fond 21 constitue un épaulement radial sur lequel vient en butée axiale la base 12a de la cuvette 12.

Ce chambrage 20 est ainsi constitué d'un chambrage "avant" 20a, entre la gorge 14 et l'extrémité correspondante de l'alésage 5 et du fourreau 4, et d'un chambrage "arrière" 20b, entre la gorge 14 et le fond 21 du chambrage 20.

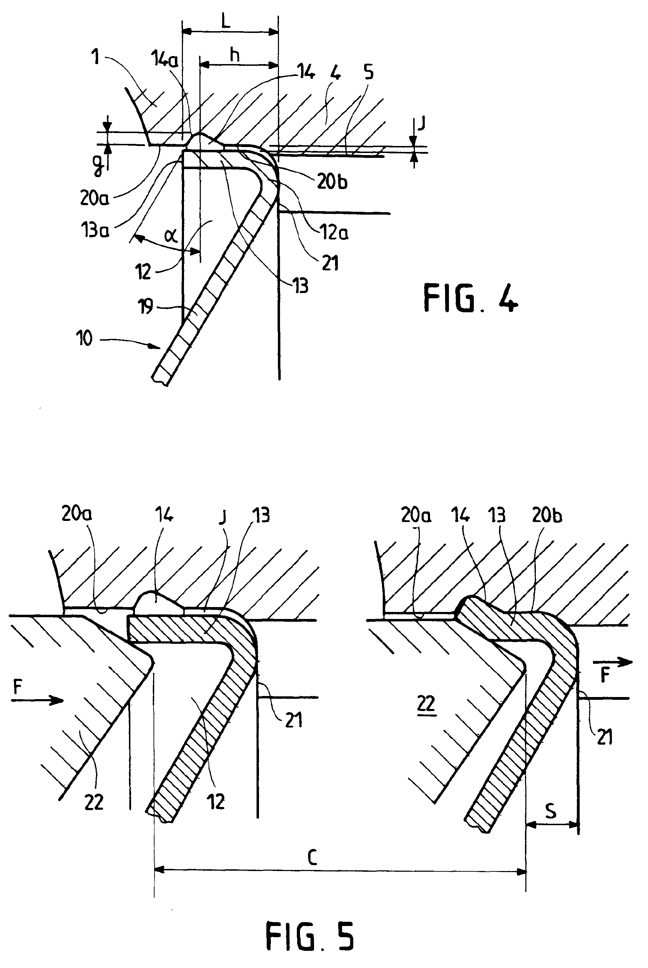

La gorge 14 est réalisée avec une pente définie par l'angle "α" vers l'extrémité correspondante de l'alésage 5, avec une profondeur "g" et à une distance "h" du fond 21 du chambrage 20 (voir figure 4).

La mise en place de la capsule 10 s'effectue de la manière suivante.

La capsule 10 est introduite dans le chambrage 20 et mise en butée sur le fond 21 de ce dernier. On notera que le jeu radial "J" entre le diamètre extérieur de la cuvette 12 et le chambrage arrière 20b est réduit au minimum admissible réalisable par des moyens de fabrication économiques standards. De plus, la position axiale de l'extrémité 13a du rebord 13 de la cuvette 12 par rapport à la position axiale à la distance "h" de la gorge 14 vis-à-vis du fond 21 du chambrage 20 doit toujours être telle que cette extrémité 13a se situe en avant de la pente selon l'angle "α". La valeur "L-h", où L est la dimension axiale de la cuvette cylindrique 12, est choisie en fonction du profil et de la profondeur "g" de la gorge 14 ainsi que du dimensionnement de la capsule 10, et la pente de la gorge 14 définit ainsi un épaulement de retenue axiale 14a.

Selon un mode préférentiel de réalisation, la capsule 10 ainsi mise en place est sertie de la manière suivante (figure 5).

Un poinçon conique 22, centré dans le chambrage avant 20a du fourreau 4, est en appui sur le diamètre intérieur du rebord 13 de la cuvette 12. Sous une charge F, variable en fonction des types et dimensions de capsules 10, le poinçon 22 se déplace d'une course C en déformant et refoulant le rebord 13 sensiblement radialement vers l'extérieur, d'une part, dans la gorge 14 le long de la pente "α", et, d'autre part, dans le chabrage arrière 20b, en supprimant ainsi le jeu de montage "J". Le poinçon 22 est arrêté à une hauteur "S" du fond 21 du chambrage 20, par une conception d'outillage "à refus" par exemple.

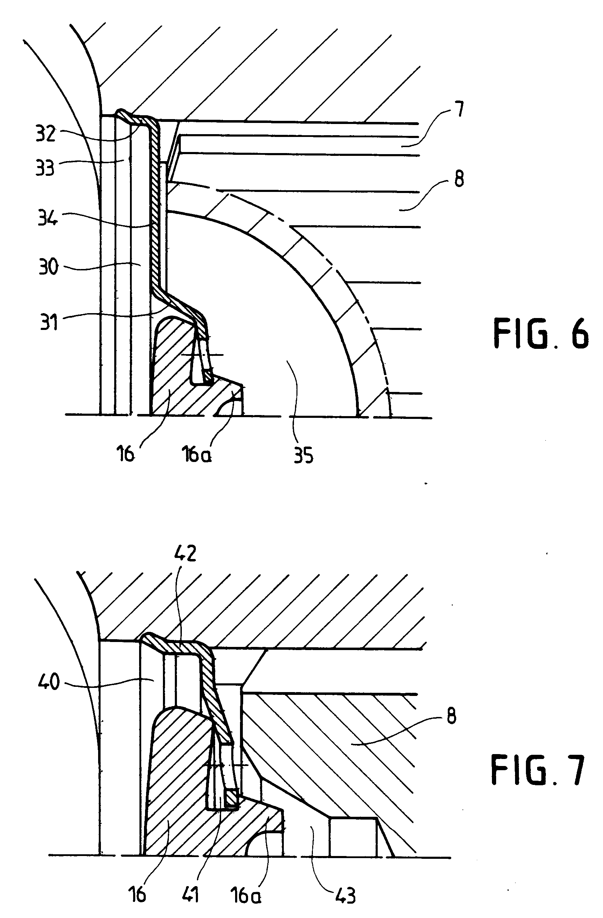

La variante de réalisation représentée sur la figure 6 est particulièrement adaptée pour les transmissions à Cardan très courtes et conçues pour des angularités de fonctionnement de l'ordre de 7°, ce qui restreint l'espace disponible, nécessaire et suffisant, entre un éventuel graisseur central et le clapet 16, pour utiliser une capsule selon l'invention, telle que décrite ci-dessus.

Néanmoins, la solution représentée à la figure 6 résoud ce problème, en proposant une capsule 30 ayant toujours une partie centrale en logement concave 31, apte à protéger le clapet 16 de la même manière que précédemment, mais dans le cas présent, le bord périphérique du logement concave 31 est relié à la base de la cuvette 32 de la capsule 30 par une couronne intermédiaire radiale plate 34, sensiblement perpendiculaire à l'axe de la cuvette cylindrique 32 plutôt que convexe.

Un évidement 35 est réalisé dans l'embout cylindrique 9 de l'élément télescopique 8, soit par forgeage, fonderie ou usinage, ce qui permet, d'une part, de loger la partie centrale 31 de la capsule 30, et, d'autre part, d'assurer une réserve minimum de lubrifiant nécessaire au fonctionnement du système télescopique.

Le mode de retenue axiale et la qualité de cette retenue, tels que présentés ci-dessus pour le premier exemple de réalisation, sont conservés dans ce second exemple.

La variante de réalisation représentée sur la figure 7 est particulièrement adaptée aux gammes légères de transmissions à Cardan offrant des encombrements très réduits.

Dans ce cas, le diamètre externe des cannelures externes de l'embout cylindrique 9 est pratiquement égal au diamètre extérieur de la tête du clapet caoutchouc 16. Ce mode de réalisation propose, pour résoudre ce problème d'encombrement, une capsule 40 dont la partie centrale en logement concave 41 est à proximité immédiate et quasi-directement rattachée par son bord périphérique à la base de la cuvette cylindrique 42, qui devient ainsi, naturellement, un puits de protection pour le clapet 16. Le capsulage par refoulement reste bien sûr, le même que celui ci-dessus décrit. Un évidement central d'usinage 43, réalisé pendant la gamme opératoire de l'embout coulissant 8, assure le logement de la partie conique de retenue 16a du clapet 16.

Dans cette réalisation, la profondeur axiale de la cuvette cylindrique 42 s'ajoute à la faible profondeur axiale du logement concave 41, à elle seule bien inférieure à la dimension axiale de la tête du clapet 16, pour définir un évidement suffisant afin de loger complètement la tête de ce clapet 16.

De plus, dans les variantes des figures 6 et 7, il est possible, comme représenté sur l'exemple des figures 1 à 3, que le fond du logement concave 15 présente la forme d'une calotte sphérique centrée sur l'axe du trou central 17.

En outre, dans le premier exemple des figures 1 à 3, le fond et le bord périphérique du logement concave 15 sont décalés axialement vers l'extrémité correspondante de l'alésage 5 ou du chambrage 20, ou vers l'extérieur de ces derniers, par rapport respectivement à la base 12a et au bord d'extrémité libre du rebord 13 de la cuvette cylindrique 12 de la capsule.

Dans ces différents exemples de réalisation, la capsule est de préférence obtenue par une unique opération d'emboutissage d'un flan de tôle métallique circulaire.

Enfin, selon tous les modes de réalisation ci-dessus décrits, il est également possible que l'immobilisation de la capsule peut être assurée par d'autres moyens que le sertissage, par exemple en donnant au rebord axial 13 de la cuvette 12 un profil sensiblement correspondant à celui de la gorge 14, dans laquelle il s'engage élastiquement jusqu'à encliquetage derrière l'épaulement 14a de retenue axiale, de ladite gorge 14.

## Revendications

1. Capsule d'obturation (10) à clapet de surpression (16) d'un organe tubulaire (4) constituant un premier élément (2) pour système télescopique (1) d'arbres de transmission à cardan, destinée à être fixée par des moyens d'immobilisation périphériques à l'une des extrémités d'un alésage axial dudit organe (4) pour constituer avec une extrémité (9) d'un second élément (8) dudit système télescopique (1), monté coulissant axialement dans ledit premier élément, une chambre étanche de coulissement (11) à volume variable, les moyens d'immobilisation périphériques étant constitués par un rebord périphérique circulaire apte à s'engager dans une gorge périphérique de retenue axiale (14) ménagée à l'intérieur dudit alésage dudit organe tubulaire (4), à proximité de l'extrémité correspondante de ce dernier, caractérisé en ce que les moyens d'immobilisation périphériques sont constitués par un rebord périphérique circulaire axial obtenu de matière avec la capsule (10) pour constituer une cuvette cylindrique (12) apte à s'engager dans la gorge périphérique de retenue axiale (14); ladite capsule (10) étant obtenue à partir d'un flan de tôle circulaire embouti, déformé dans sa partie centrale, pour constituer un logement concave (15) apte à loger la tête du clapet de surpression (16) en caoutchouc, encliqueté dans un trou central (17) ménagé dans le fond dudit logement concave (15) de la capsule (10) et en communication avec la chambre de coulissement (11) du système télescopique (1), de sorte que ladite tête du clapet (16) obture de manière étanche des trous (18) répartis autour dudit trou central (17) et également ménagés dans ledit fond du logement concave (15).

2. Capsule selon la revendication 1, caractérisée en ce que le rebord (13) de la cuvette (12) est expansé dans la gorge (14) de l'organe tubulaire (4) par refoulement de matière au cours d'une opération de sertissage, pour y être retenu axialement par un épaulement (14a) de ladite gorge (14).

3. Capsule selon la revendication 1, caractérisée en ce que le rebord axial (13) de la cuvette (12) a un profil sensiblement correspondant à celui de la gorge (14), dans laquelle il s'engage élastiquement jusqu'à encliquetage derrière un épaulement (14a) de retenue axiale de ladite gorge (14).

4. Capsule selon l'une des revendications 2 et 3, caractérisée en ce que la gorge (14) de l'organe tubulaire (4) est ménagée sur la paroi périphérique interne d'un chambrage (20) aménagé dans la partie d'extrémité correspondante de l'alésage de l'organe tubulaire (4) et dont le fond (21) constitue un épaulement radial sur lequel vient en butée axiale la cuvette (12), lors du montage de la capsule (10).

5. Capsule selon la revendication 4, caractérisée en ce qu'une partie annulaire de cuvette cylindrique (12) située entre son rebord (13) logé dans ladite gorge (14) et sa base de liaison à la partie centrale de la capsule (10) est déformée en expansion sensiblement radiale vers l'extérieur contre la paroi périphérique interne dudit chambrage (20), au montage de ladite capsule (10) dans ledit alésage.

6. Capsule selon l'une des revendications 2 à 5, caractérisée en ce que la gorge (14) est réalisée selon une pente, dans sa partie dirigée vers ladite extrémité correspondante de l'alésage de l'organe tubulaire (4), et selon une profondeur, aptes à assurer la retenue axiale de ladite capsule (10) après mise en place.

7. Capsule selon la revendication 1, caractérisée en ce que la partie centrale de ladite capsule (10) constituée par le logement concave (15) est reliée à ladite base de la cuvette (12) par une partie intermédiaire convexe (19) apte à constituer une réserve de lubrifiant, dans la position minimum de coulissement du système télescopique.

8. Capsule selon la revendication 7, caractérisée en ce que le fond et le bord périphérique de son logement concave (15) sont décalés axialement vers l'extrémité correspondante dudit alésage par rapport respectivement à ladite base et au bord d'extrémité libre de ladite cuvette cylindrique (12).

9. Capsule selon la revendication 1, caractérisée en ce que la partie centrale de ladite capsule (10) constituée par le logement concave (15) est reliée à ladite base de la cuvette (32) par une partie intermédiaire plane et radiale (34) s'étendant sensiblement perpendiculairement à l'axe de ladite cuvette cylindrique (32).

10. Capsule selon l'une des revendications 1 à 9, caractérisée en ce que ledit logement concave de la capsule est d'une faible profondeur axiale par rapport à la dimension axiale dudit clapet (16), et en ce que le bord périphérique dudit logement concave est à proximité de la base de la cuvette cylindrique (42), de sorte que ladite tête du clapet (16) et logée dans le logement concave (15) et dans ladite cuvette cylindrique.

11. Capsule selon l'une des revendications 1 à 10, caractérisée en ce que ledit fond du logement concave (15) a la forme d'une calotte sphérique centrée sur l'axe du trou central (17).

12. Capsule selon l'une des revendications précédentes, caractérisée en ce qu'elle est obtenue en une opération unique d'emboutissage d'un flan de tôle circulaire.

## Patentansprüche

1. Verschlusskapsel (10) mit Überdruckventil (16) für ein rohrförmiges Organ (4), das ein erstes Element (2) für ein Teleskopsystem (1) von Kardanwellen bildet, die dazu bestimmt ist, durch Umfangsblockierungseinrichtungen an einem der Enden einer axialen Bohrung des Organs (4) befestigt zu werden, um mit einem Ende (9) eines zweiten Elements (8) des Teleskopsystems (1), das in dem ersten Element axial verschiebbar montiert ist, eine dichte Gleitkammer (11) mit veränderlichem Volumen zu bilden, wobei die Umfangsblockierungseinrichtungen aus einem abgewinkelten, kreisförmigen Umfangsrand bestehen, der in eine Umfangsnut (14) zur axialen Blockierung eintreten kann, die im Inneren der Bohrung des rohrförmigen Organs (4) in Nähe seines entsprechenden Endes vorgesehen ist, dadurch gekennzeichnet, daß die Umfangsblockierungseinrichtungen aus einem axial abgewinkelten kreisförmigen Umfangsrand bestehen, der mit der Kapsel (10) aus einem Stück gebildet ist, um eine zylindrische Schale (12) zu bilden, die in die Umfangsnut (14) eintreten kann, wobei die Kapsel (10) aus einer kreisförmigen tiefgezogenen Blechplatte hergestellt ist, die in ihrem zentralen Teil verformt ist, um eine konkave Vertiefung (15) zur Aufnahme eines Kopfs eines Überdruckventils (16) aus Gummi zu bilden, das in ein zentrales Loch (17) eingerastet ist, das im Boden der konkaven Vertiefung (15) der Kapsel (10) vorgesehen ist und mit der Gleitkammer (11) des Teleskopsystems in Verbindung ist, so daß der Kopf des Ventils (16) Löcher (18) dicht verschließt, die um das zentrale Loch (17) herum verteilt und ebenfalls im Boden der konkaven Vertiefung (15) angeordnet sind.

2. Kapsel nach Anspruch 1, dadurch gekennzeichnet, daß der abgewinkelte Rand (13) der Schale (12) in die Nut (14) des rohrförmigen Organs (4) hinein durch Drücken des Werkstoffs in einem Falzvorgang ausgedehnt wird, um darin axial durch eine Schulter (14a) der Nut (14) blockiert zu werden.

3. Kapsel nach Anspruch 1, dadurch gekennzeichnet, daß der axial abgewinkelte Rand (13) der Schale (12) ein Profil besitzt, das im wesentlichen dem der Nut (14) entspricht, in die er elastisch eintritt, bis er hinter einer Schulter (14a) der Nut (14) zur axialen Blockierung einrastet.

4. Kapsel nach einem der Ansprüche 2 und 3, dadurch gekennzeichnet, daß die Nut (14) des rohrförmigen Organs (4) an der inneren Umfangswand einer Einsenkung (20) vorgesehen ist, die im entsprechenden Endteil der Bohrung des rohrförmigen Organs (4) vorgesehen ist und deren Boden (21) eine radiale Schulter bildet, an der die Schale (12) bei der Montage der Kapsel (10) axial in Anschlag kommt.

5. Kapsel nach Anspruch 4, dadurch gekennzeichnet, daß ein ringförmiger Teil der zylindrischen Schale (12),der sich zwischen ihrem in der Nut (14) sitzenden abgewinkelten Rand (13) und ihrer die Verbindung mit dem zentralen Teil der Kapsel (10) herstellenden Basis befindet, bei der Montage der Kapsel (10) in der Bohrung im wesentlichen radial nach außen an die innere Umfangswand der Einsenkung (20) heran gedehnt wird.

6. Kapsel nach einem der Ansprüche 2 bis 5, dadurch gekennzeichnet, daß die Nut (14) eine solche Neigung in ihrem auf das entsprechende Ende der Bohrung des rohrförmigen Organs (4) zu gerichteten Teil und eine solche Tiefe besitzt, daß die axiale Blockierung der Kapsel (10) nach dem Einsetzen gewährleistet ist.

7. Kapsel nach Anspruch 1, dadurch gekennzeichnet, daß der zentrale Teil der Kapsel (10), der von der konkaven Vertiefung (15) gebildet ist, mit der Basis der Schale (12) durch einen konvexen Zwischenteil (19) verbunden ist, der in der Minimum-Ausfahrstellung des Teleskopsystems eine Schmiermittelreserve bilden kann.

8. Kapsel nach Anspruch 7, dadurch gekennzeichnet, daß der Boden und der Umfangsrand ihrer konkaven Vertiefung (15) axial auf das entsprechende Ende der Bohrung zu bezüglich der Basis bzw. des freien Endrandes der zylindrischen Schale (12) versetzt sind.

9. Kapsel nach Anspruch 1, dadurch gekennzeichnet, daß der zentrale Teil der Kapsel (10), der von der konkaven Vertiefung (15) gebildet ist, mit der Basis der Schale (32) durch einen planen, radialen Zwischenteil (34) verbunden ist, der sich im wesentlichen senkrecht zur Achse der zylindrischen Schale (32) erstreckt.

10. Kapsel nach einem der Ansprüche 1 bis 9, dadurch gekennzeichnet, daß die konkave Vertiefung der Kapsel bezüglich der axialen Abmessung des Ventils (16) eine kleine axiale Tiefe hat und daß der Umfangsrand der konkaven Vertiefung sich in Nähe der Basis der zylindrischen Schale (42) befindet, so daß der Kopf des Ventils (16) in der konkaven Vertiefung (15) und in der zylindrischen Schale sitzt.

11. Kapsel nach einem der Ansprüche 1 bis 10, dadurch gekennzeichnet, daß der Boden der konkaven Vertiefung (15) die Form einer Kugelkalotte hat, deren Mittelpunkt auf der Achse des zentralen Lochs (17) liegt.

12. Kapsel nach einem der vorhergehenden Ansprüche, dadurch gekennzeichnet, daß sie in einem einzigen Arbeitsgang durch Tiefziehen einer kreisförmigen Blechplatte gebildet ist.

## Claims

1. A cap (10) with overpressure flap (16) for closing a tubular member (4) forming a first element (2) for a telescopic system (1) of cardan transmission shafts, said cap being adapted to be attached via peripheral immobilizing means to one of the ends of an axial bore in said member (4) to cooperate with an end (9) of a second element (8) of said telescopic system (1) which is mounted to slide axially in said first element, to form a sealing-tight sliding chamber (11) of variable volume, said peripheral immobilizing means being formed by a circular peripheral flange adapted to engage in a peripheral axial retaining groove (14) formed inside said bore of said tubular member (4) adjacent the corresponding end thereof, characterized in that said peripheral immobilizing means are formed by an axial circular peripheral flange produced unitarily with the cap (10) to form a cylindrical bowl (12) adapted to engage in the peripheral axial retaining groove (14) said cap (10) being obtained from a drawn circular sheet metal blank whose central portion is deformed to form a concave seat (15) adapted to receive the head of a rubber excess pressure flap (16) snapped into a central hole (17) with which the end of said concave seat (15) of the cap (10) is formed and communicating with the sliding chamber (11) of the telescopic system, so that said head of the flap (16) closes sealing-tight holes (18) distributed around said central hole (17) and also formed in the end of the concave seat (15).

2. A cap according to claim 1, characterized in that the flange (13) of the bowl (12) is expanded in the groove (14) in the tubular member (4) by the upsetting of material during a crimping operation, to be retained axially therein by a shoulder (14a) of said groove (14).

3. A cap according to claim 1, characterized in that the axial flange (13) of the basin (12) has a section substantially corresponding to that of the groove (14) in which it engages resiliently until it snaps behind an axial retaining shoulder (14a) of said groove (14).

4. A cap according to one of claims 2 and 3, characterized in that the groove (14) in the tubular member (4) is provided in the inner peripheral wall or a recess (20) with which the corresponding end portion of the bore of the tubular member (4) is farmed and whose end (21) forms a radial shoulder axially abutted by the bowl (12) during the assembly of the cap (10).

5. A cap according to claim 4, characterized in that an annular portion of the cylindrical bowl (12) situated between its flange (13) received in said groove (14), and its base for connection to the central portion of the cap (10) is deformed by substantially radial outward expansion against the inner peripheral wall of said recess (22) when said cap (10) is mounted in said bore.

6. A cap according to one of claims 2 to 5, characterized in that the groove (14) is produced with an inclination, in its portion directed towards said corresponding end of the bore of the tubular member (4), and with a depth which are adapted to ensure the axial retention of said cap (10) after it has been put in place.

7. A cap according to claim 1, characterized in that the central portion of said cap (10), formed by the concave seat (15). is connected to said base of the bowl (12) via a convex intermediate portion (19) adapted to form a reserve of lubricant in the minimum sliding position of the telescopic system.

8. A cap according to claim 7, characterized in that the end and the peripheral edge of its concave seat (15) are axially offset in the direction of the corresponding end of said bore in relation to said base and to the free end edge of said cylindrical bowl (12) respectively.

9. A cap according to claim 1, characterized in that the central portion of said cap (10), formed by the concave seat (15), is connected to said base of the bowl (32) via a flat and radial intermediate portion (34) extending substantially perpendicularly to the axis of said cylindrical bowl (32).

10. A cap according to one of claims 1 to 9, characterized in that said concave seat of the cap is of a small axial depth in relation to the axial dimension of said flap (16), the peripheral edge of said concave seat being adjacent the base of the cylindrical bowl (42), so that said head of the flap (16) is received in the concave seat (15) and in said cylindrical bowl.

11. A cap according to one of claims 1 to 10, characterized in that said end of the concave seat (15) has the shape of a part-spherical element centred on the axis of the central hole (17).

12. A cap according to one of the preceding claims, characterized in that it is obtained by a single drawing operation on a circular sheet metal blank.
